# EUROPEAN PATENT APPLICATION

(11) **EP 1 980 442 A2**
(43) Date of publication of application: **15.10.2008**
(21) Application number: 08005825.8
(22) Date of filing: 27.03.2008
(51) Int. Cl.: B60K 23/04

(54) **Driving force transmission system for four wheel frive vehicle**

(30) Priority: 29.03.2007 JP 2007087983
(71) Applicant: JTEKT Corporation, Osaka-shi Osaka 542-8502 (JP)
(72) Inventor: Kamikawa, Tsuyoshi, Osaka-shi Osaka 542-8502 (JP); Inoue, Masahiro, Osaka-shi Osaka 542-8502 (JP); Yamaguchi, Masanobu, Osaka-shi Osaka 542-8502 (JP)
(74) Representative: Schaeberle, Steffen

(57) **Abstract**

Power of an engine is divided to be transmitted to a power transmission path to front wheels and a power transmission path to rear wheels by a transfermechanism where the power has just passed through a transmission so as to be transmitted to front wheels and rear wheels. In addition, a torque reduction and transmission joint is provided on the power transmission path to the rear wheels, so that the rotational drive torque to the rear wheels is reduced to be transmitted thereto. Additionally, constant velocity joints which are provided on the power transmission path to the rear wheels are configured to have a smaller torque transmission capacity and a smaller size than those of constant velocity joints which are provided on the power transmission path to the front wheels.

## Description

### BACKGROUND OF THE INVENTION

### 1. Field of the Invention

The present invention relates to a driving force transmission system for a four wheel drive vehicle, and more particularly to a driving force transmission system for a four wheel drive vehicle in which power from a drive source can be transmitted to all four wheels or left and right front wheels and left and right rear wheels via two power transmission paths which are divided where the power from the drive source has passed through a transmission.

### 2. Related Art

Some motor vehicles utilize a so-called four wheel drive (4WD) system as a drive system for improving the driving capability on snow or ice roads. The driving performance in such a driving condition is improved according to the four wheel drive system, however,' with this drive system there is caused a drawback that the fuel economy is deteriorated due to the four wheel being driven.

To cope with this drawback, there exists a drive system in which a four wheel drive is automatically engaged when needed to thereby improve the fuel economy. In this drive system, although drive is transmitted at all times to either of the front wheels or the rear wheels, only when a condition requires the other of the front and rear wheels to be driven, a drive coupled state between the front and rear wheels is automatically produced so as to engage the four wheel drive.

As a driving force transmission system which achieves the drive coupled state only when the other wheels are required to be involved, there is a drive system in which power is transmitted using a driving force transmission system disclosed in JP-A-2002-257159 below. Normally, in the four wheel drive system, power of a drive source such as the engine is distributed where it has passed through the transmission to two power flow or transmission paths along which the power is transmitted to the front and rear wheels. A driving force transmission system like the one disclosed in JP-A-2002-257159 is provided on one of the two power transmission paths, so as to engage the four wheel drive only when it is required by controlling the drive force transmission, system so provided.

For example, in a type in which the rear wheels are put in a power transmitted state only when they are so required, the driving force transmission system is provided on the power transmission path to the rear wheels. In this type, the driving force is configured to be transmitted to the front wheels at all times, and the rear wheels are put in a driven state when they are so required according to the driving conditions, so as to engage the four wheel drive.

In controlling the driving force transmission system that is disposed on the power transmission path to the rear wheels, the driving force transmission system is normally kept released under the normal driving condition, so that no driving force is configured to be transmitted to the rear wheels. However, for example, when the front wheels as the driving wheels in the normal driving condition start to loose traction and spin and a difference in wheel speed between the front and rear wheels reaches or exceeds a predetermined value, the driving force transmission system is controlled to be put in a power transmission state so that the four wheel drive is engaged. In addition, it is general understanding that since when the driving force transmission system is in the power transmission state, a torque something like one necessary to get out of such a slipping state may only have to be transmitted to the rear wheels, a torque transmission control is performed in which torque to be transmitted is reduced for transmission. Namely; the drive torque that is transmitted to the rear wheels is reduced to be lower than the drive torque that is transmitted to the front wheels by the driving force transmission system for transmission to the rear wheels.

Incidentally, in the four wheel drive system, differential units are provided on the power transmission paths to the front wheels and the rear wheels in such a manner as to be interposed between the left and right wheels on the front and rear wheels, and drive shafts are provided between the differential units and the left and right wheels so as to drivingly couple together the differential unit and the left and right wheels. Joints such as constant velocity joints are mounted at both ends of the drive shaft so as to enable a transmission of rotation at constant speeds. In addition, rolling bearing units are also provided in the positions where the constant velocity joints are provided-so as to support rotatably the drive shaft.

The constant velocity joints and rolling bearing units which are provided in the power transmission paths are normally of the same types whether they are provided on the power transmission path to the front wheels or on the power transmission path to the rear wheels. In addition, from the viewpoint of commonization of components, components of the same size are normally used for both the power transmission path to the front wheels and the power transmission path to the rear wheels.

As has been described above, even in a case where the drive torque that is transmitted to either of the front wheels and the rear wheels is reduced to be lower than the transmission torque that is transmitted to the other of the front and the rear wheels for transmission in the four wheel drive system, from the viewpoint of parts commonization, it is ordinary practice to use, as components provided on the power transmission paths to the front and rear wheels., constant velocity joints and rolling bearing unit of the same sizes.

### SUMMARY OF THE INVENTION

Then, the inventors paid attention to the fact that in a case where the drive torque that is transmitted to either of the front wheels and the rear wheels can be reduced to be lower than the transmission torque that is transmitted to the other of the front and the rear wheels for transmission, from the viewpoint of power transmission properties, the torque transmission capacities of the constituent components which make up the power transmission path along which the reduced torque is transmitted can be smaller than the torque capacities of the constituent components which make up the power transmission path to the other wheels. In addition, the inventors have come to find that the weight of the drive line can be reduced by reducing the size of the constituent components and that this reduction in the drive line weight links with an improvement in fuel economy and can realize an improvement in assemblage of drive shafts which constitute the power transmission paths.

Thus, a problem to be solved by the invention is, in a case where in the four wheel drive system, the drive torque that is transmitted to either of the front wheels and the rear wheels can be reduced to be lower than the drive torque that is transmitted to the other of the front wheels and the rear wheels, how to make the torque transmission capacity and size of the constituent components of the power transmission path along which the reduced torque is transmitted smaller than those of the constituent components of the power transmission path to the other wheels.

With a view to solving the problem, according to a first aspect of the invention, there is provided a driving force transmission system for a four wheel drive vehicle, comprising: a first pair of wheels; a second pair of wheels; a first power transmission path connecting a transmission to which power is supplied from a driving source and the first pair of wheels to transmit a driving force to the first pair of wheels; a second power transmission path connecting the transmission and said second pair of wheels to transmit a driving force to the- second pair of wheels; and a driving force transmission limiter capable of limiting the -driving force to the first pair of wheels so that the driving force transmitted to the first pair of wheels is lower than the driving force transmitted to the second pair of wheels; wherein a first joint unit provided in the first power transmission path between the driving force transmission limiter and the first pair of wheels is configured to have a smaller torque transmission capacity and a smaller size than a second joint unit provided in the second power transmission path.

According to the first aspect of the invention, the drive torque that is transmitted to the first pair of wheels in the four wheel drive vehicle is reduced to be lower than the drive torque that is transmitted to the second pair of wheels by the driving force transmission limiter for transmission to the first pair of wheels. In addition, the constituent component such as the joint unit, for example, a constant velocity joint which is provided on the first power transmission path through which the reduced driving force is transmitted is configured to have the smaller torque transmission capacity and the smaller size than those of the joint unit which is provided on the second power transmission path for transmitting the driving force to the second pair of wheels as driving wheels, as a result of which the con-figuration weight of the first power transmission path through which the reduced driving force is transmitted can be reduced to be lighter than the configuration weight of the second power transmission path.

Next, according to a second aspect of the invention, there is provided a driving force transmission system for a four wheel drive vehicle as set forth in the first aspect of the invention, wherein a rolling bearing unit which is provided in the first power transmission path between the driving force transmission limiter and the first pair of wheels is configured to have a smaller torque transmission capacity and a smaller size than a second rolling bearing unit provided in the second power transmission path.

According to the second aspect of the invention, furthermore, the rolling bearing unit which is the constituent component provided on the first power transmission path along which the reduced driving force is transmitted is also configured to have the smaller bearing capacity and the smaller size than those of the rolling bearing unit which is provided on the second power transmission path for transmitting the driving force to the second pair of wheels as drive wheels, as a result of which the configuration weight of the power transmission path through which the reduced driving force is transmitted can be reduced to be much lighter than the configuration weight of the other power transmission path.

Next, according to a third aspect of the invention, there is provided a driving force transmission system for a four .wheel drive vehicle as set forth in the first aspect of the invention, further comprising: a differential unit in the first power transmission path between the driving force transmission limiter and the first pair of wheels; a drive shaft assembly in which a constant velocity joint is assembled to an end of a drive shaft provided in the first power transmission path between the differential unit and the first pair of wheels; a knuckle provided on a side of the first pair of drive wheels to support the drive shaft assembly, wherein the drive shaft assembly is configured to be inserted in a mounting hole of the knuckle from the side of the first pair of drive wheels towards the differential unit.

According to the third aspect of the invention, the drive shaft adapted to transmit power between the differential unit and the wheel is configured into the drive shaft assembly in which the constant velocity joints which are mounted at both the ends thereof and furthermore the rolling bearing units are integrally mounted thereon. The maximum outside diameter of this constant velocity joint is taken as the maximum external .dimension of the constant velocity joint or the rolling bearing unit. In addition, the constant velocity joint and the rolling bearing unit which are the constituent components provided on the first power transmission path along which the reduced driving force is transmitted can be configured such that their external dimensions are smaller than those of the constant velocity joint and the rolling bearing unit which are provided on the second power transmission path. Because of this, when inserting the drive shaft assembly into the mounting hole of the knuckle arm to mount it therein, the diameter of the mounting hole of the knuckle arm only may have to be of such a size that the drive shaft assembly can be inserted to pass therethrough, and even in the event that the knuckle mounting hole is formed small, the drive shaft assembly can be inserted to pass therethrough.

According to a fourth aspect of the invention, there is provided a driving force transmission system for 6 four wheel drive vehicle, comprising: a first pair of wheels;
a second pair of wheels; a first power transmission path connecting a transmission to which power is supplied from a driving source and the first pair of wheels to transmit a driving force to the first pair of wheels; a second power transmission path connecting the transmission and said second pair of wheels to transmit a driving force to the second pair of wheels; a driving force transmission limiter capable of limiting the driving force to the first pair of wheels so that the driving force transmitted to the first pair of wheels is lower than the second pair of wheels; wherein a constant velocity joint and a rolling bearing unit are provided in the first power transmission path between the driving force transmission limiter and the first pair of wheels, and an outer diameter of an outer ring of the constant velocity joint is substantially equal to or less than an outer diameter of an outer ring member of the rolling bearing unit.

According to a fifth aspect of the invention, there is provided a driving force transmission system for a four wheel drive vehicle as set forth in the fourth aspect of the invention, wherein an inner ring member of the rolling bearing unit is integrally formed with the outer ring of the constant velocity joint.

Since the driving force transmission system for a four wheel drive vehicle of the invention adopts the units described above, the following advantages can be obtained.

First of all, according to the first aspect of the invention, since the drive torque that is transmitted to the first pair of wheels of the front and rear wheels is reduced to be lower than the drive torque that is transmitted to the second pair of wheels of the front and rear wheels by the driving force transmission limiter for transmission to the first pair of wheels, the joint units such as the constant velocity joints provided on the first power transmission path along which the reduced drive torque is transmitted can be made smaller in size than the joint units provided on the second power transmission path, and hence the reduction in-weight in association with the reduction in size can be realized, thereby making it possible to realize the reduction in weight of the whole of the power transmission paths.

Next, according to the second aspect of the invention, furthermore, since the rolling bearing units which are the constituent components provided on the first power transmission path-along which the reduced drive torque is transmitted can be made smaller in size than the rolling bearing units provided on the second power transmission path, and hence the reduction in weight in association with the reduction in size can be realized, thereby making it possible to realize the reduction in weight of the whole of the power transmission paths.

Next, according to the third aspect of the invention, the power transmission between the differential unit provided on the power transmission path along which the reduced drive torque is transmitted and the wheels is implemented by the drive shaft assemblies, and since the constant velocity joints and the rolling bearing units which are mounted at the end portions of the drive shaft assemblies can be reduced in size, their external dimensions can be reduced, as a result of which even in a case where the drive shaft assemblies are mounted by being inserted to be passed through the mounting holes of the knuckle arms, the mounting holes may only have to be of such a size that the drive shaft assemblies can be inserted to pass therethrough, and the mounting holes may be relatively small, this providing an advantage that the strength-related aspect of the knuckle arm works effectively.

According to the fourth aspect of the invention, since the outside diameter of the outer ring of the constant velocity joint is equal to or less than the outside diameter of the outer ring member of the rolling bearing unit, the roiling bearing unit can be mounted on the knuckle arm more reliably.

According to the fifth aspect of the invention, the inner ring member as independent member can be omitted by forming the inner ring member of the rolling bearing integrally with the outer ring of the constant velocity joint. Therefore, it is possible to realize a reduction in the axial dimension. In addition, the overall outside diameter of the assembly unit can also be reduced in diameter in association with the omission of the inner ring member.

### BRIEF DESCRIPTION OF THE DRAWINGS

Fig. 1 is a schematic diagram showing power transmission paths of a four wheel drive vehicle.
Fig. 2 is a sectioned view showing a form of an assembly unit of a constant velocity joint and a hub shaft portion which is provided in a portion indicated by a reference character A in Fig. 1.
Fig. 3 is a sectioned view showing another form of an assembly unit of the same type.
Fig. 4 is a schematic view of a drive shaft assembly provided on a rear wheel side.

### DETAILED DESCRIPTION OF THE PREFERRED EMBODIMENTS

Hereinafter, an embodiment of the invention will be described using the drawings. A four wheel drive vehicle in this embodiment is based on a front wheel drive vehicle, and hence, a driving force transmission limiter is provided on a power transmission path to the rear wheels.

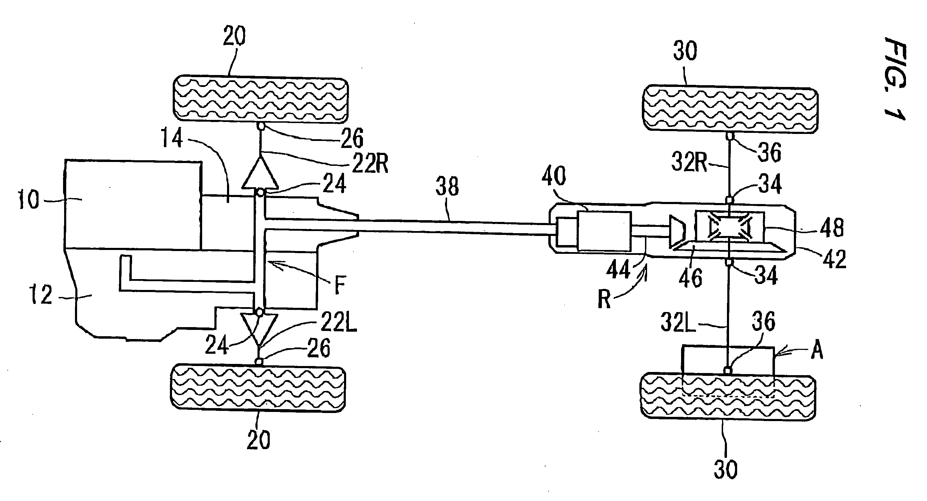

Fig. 1 is a schematic diagram showing power transmission paths of the four wheel drive vehicle of the embodiment. In Fig. 1, an engine 10 as a drive source is mounted in a front part of a motor vehicle. A rotational driving force of the engine 10 is firstly transmitted to a transmission 12; and in the transmission 12, the rotation or speed of the engine is reduced or increased to be transmitted to a transfer mechanism 14. As is generally known, an automatic transmission or a manual transmission is used as the transmission 12. Then, the power flow or transmission path is divided into two paths such as a power transmission, path F to front wheels and a.power transmission path R to rear wheels in the transfer mechanism 14, so that the rotational driving force of the engine is transmitted, respectively, to left and right front wheels 20 and left and right rear wheels 30.

A front differential unit, whose illustration is omitted, is provided on the power transmission path F to the front wheels 20 which extends beyond the transfer mechanism 14. Normally, the front differential unit is disposed and incorporated in the transfer mechanism 14 of the transmission 12. Drive shafts 22R, 22L are provided between the front differential unit and the left and right front wheels 20 in such a manner as to be disposed, respectively, left and right to the front differential unit, and the rotational driving force is transmitted to the left and right front wheels 20 via the drive shafts 22R, 22L, respectively.

Constant velocity joints 24, 26 are provided at both ends of the drive shafts 22R, 22L, so that the rotational driving force is configured to be transmitted to the wheels at constant speeds. Note that constant velocity joints denoted by the same reference numerals means constant velocity joints of the same type. Namely, the constant velocity joints 24 which are provided on front differential unit sides of the drive shafts 22R, 22L are both constant velocity joints of the same type, whereas the constant velocity joints 26 which are provided on left and right front wheel 20 sides of the drive shafts 22R, 22L are constant velocity joints of the same type. In addition, rolling bearing units for rotatably supporting hub shafts are configured so as to be integrally incorporated in the constant velocity joints 26 which are provided on the left and right front wheel 20 sides of the drive shafts and are made to be mounted on knuckle arms attached to a body in a similar way in which the rear wheels are support as will be described later.

Provided on the power transmission path R to the rear wheels 30 which extends beyond the transfer mechanism 14 are a propeller shaft 38, a torque reduction and transmission joint 40 as a driving force transmission limiter, a rear differential unit 42 and drive shafts 32R, 32L. The torque reduction and transmission joint 40 is provided between a rear end of the propeller shaft 38 and the rear differential unit 42 for reducing rotational drive torque transmitted to the propeller shaft 38 from the transfer mechanism 14 and transmitting the drive torque so reduced to a drive pinion 44 of the rear differential unit 42. For example, the drive torque is reduced to one half for transmission to the drive pinion 44.

As the torque reduction and transmission joint 40, there are raised known various types of joint units. For example, there is a joint unit used as a driving force transmission unit disclosed in JP-A-2002-257159. This joint unit is such that the torque transmission capability of the transmission joint is controlled by changing the attraction force which generates the torque transmission capability of the transmission joint according to the value of current applied to a coil of an electromagnet. According to this joint unit, the value of current applied to the coil of the electromagnet is controlled to be changed, so as to reduce the transmission drive torque for transmission. Consequently, in the event that the energization of the coil of the electromagnet is eliminated, it also possible to release the torque transmission state by the joint.

The torque transmission control by the torque reduction and transmission joint 40 according to the embodiment will be implemented as below. In such a state that the motor vehicle is in the normal driving condition and there is virtually no difference in wheel speed between the front wheels 20 and the rear wheels 30, no energization of the coil of the electromagnet is performed, and the torque reduction and transmission joint 40 is controlled not to implement the transmission of rotational driving force. Namely, in this state, a drive state is produced in which the rotational driving force of the engine 10 is not transmitted to the rear wheels 30 but is transmitted to only the front wheels 20 by way of the power transmission path F, whereby an improvement in the fuel economy in the normal driving condition is realized.

Next, when the front wheels start to loose traction and spin and there is produced a difference in wheel speed between the front wheels 20 and the rear wheels 30, the difference in wheel speed reaching or exceeding a predetermined value, the energization of the coil of the electromagnet is started to be implemented, so as to control the torque reduction and transmission joint 40 to enable the transmission of rotational driving force. In addition, this control is performed to transmit to the rear wheels 30 a driving force something like one with which the vehicle can get out of the slipping state and hence, in this control, the drive torque of the propeller shaft is reduced to one half for transmission, whereby the four wheel drive is engaged in the motor vehicle, and the motor vehicle is allowed to easily get out of the slipping state.

The rotational driving force that is outputted by the torque reduction and transmission joint 40 being controlled into a torque transmission state is transmitted to the rear differential 42: As is generally known, the rear differential unit 42 is provided between the left and right rear wheels 30. The rear differential unit 42 shown is such as to have the generally known configuration, in which the rotational driving force transmitted thereto is transmitted from the drive pinion 44 to a ring gear 46 through mesh engagement of the two gears and is then transmitted to the drive shafts 32R, 32L via a differential mechanism 48. Note that in these days, the torsen differential unit is used for the rear differential unit 42 in some cases.

The drive shafts 32R, 32L are provided between the rear differential unit 42 and the left and right rear wheels 30, respectively, and the rotational driving force is transmitted from the rear differential unit to the left and right rear wheels 30 via the drive shafts 32R, 32L, respectively.

Constant velocity joints 34, 36 are provided at both ends of the drive shafts 32R, 32L, so that the rotational driving force is configured to be transmitted to the wheels at constant speeds. Note that as with the configuration of the power transmission path to the front wheels, constant velocity joints denoted by the same reference numerals means constant velocity joints of the same type. Namely, the constant velocity joints 34 which are provided on rear differential unit 42 sides of the drive shafts 32R, 32L are both constant velocity joints of the same type, whereas the constant velocity joints 36 which are provided on left and right rear wheel 30 sides of the drive shafts 32R, 32L are constant velocity joints of the same type. In this example, as the constant velocity joint 34, a tripot joint is used which is allowed to slide relative to an axial direction, while a fixed Birfield joint which cannot slide relative to the axial direction is used as the constant joint 36. In addition, the constant velocity joint 24 which is provided on the power transmission path F to the front wheels and the constant velocity joint 34 which is provided on the power transmission path R to the rear wheels are constant velocity joints of the same type. Similarly, the constant velocity joint 26 and the constant velocity joint 36 are constant velocity joints of the same type. In addition, the constant velocity joint 36 provided on the rear wheel 30 side is configured to integrally incorporate therein a rolling bearing unit which rotatably supports a hub shaft, and as will be described in detail later, the constant velocity joint 36 is made to be mounted on a body side knuckle arm.

As has been described heretofore, as to the constant velocity joints which are provided on the power transmission path F to the front wheels and the power transmission path R to the rear wheels, although the constant velocity joints 24 and 34 are made up of the constant velocity joints of the same kind and type and the constant velocity joints 26 and 26 are made up of the constant velocity joints of the same kind and type, as to their size or the torque transmission capacity, the constant velocity joints 34, 36. which are provided on the power transmission path R to the rear wheel are configured to have a smaller torque transmission capacity and a. smaller size than those of the constant velocity joints 24, 26 which are provided on the power transmission path F to the front wheels. This is because since even when the rotational driving force is transmitted to the rear wheels 30 by the torque reduction and transmission joint 40, the driving force so transmitted is transmitted as the driving force which is reduced to one half of the rotational driving force that is transmitted to the front wheels 20, the constant velocity joints 34, 36 which are provided on the power transmission path R to the rear wheels are made up of the constant velocity joints which have the transmission capacity matching the driving force so transmitted thereby.

Similarly, also as to the capacity of the rolling bearing units which are assembled as subassemblies on to the constant velocity joints 26 and 36 which are provided, respectively, on the power transmission path F to the front wheels and the power transmission path R to the rear wheels, the rolling bearing unit provided on the power transmission path R to the rear wheel is configured to have a smaller bearing capacity and a smaller size than those of the rolling bearing unit provided on the power transmission path F to the front wheels.

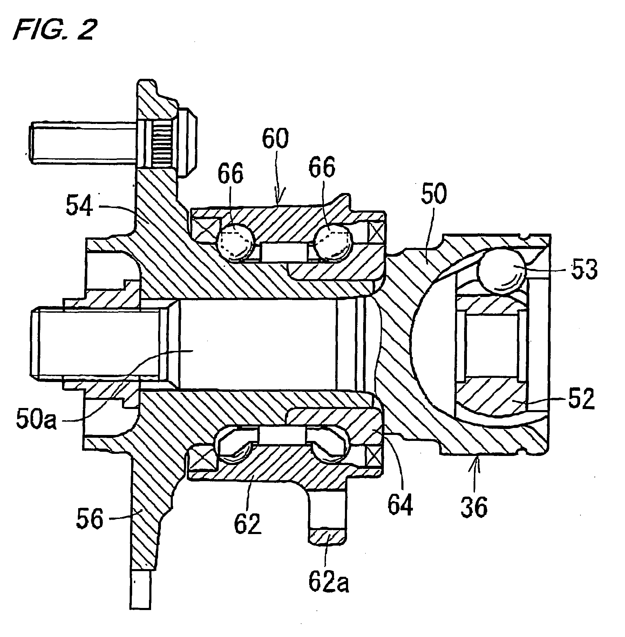

Fig. 2 is a diagram showing a portion of the power transmission path R to the rear wheels which is indicated by a reference character A in Fig. 1 in an enlarged fashion and shows a form of a specific configuration of an assembly unit made up of the constant velocity joint 3 6 and the corresponding rolling-bearing unit which are provided in a position facing the left rear wheel 30.

As is shown in Fig. 2, the constant velocity joint 36 is made up of a Birfield joint. The Birfield joint is such as to have a configuration, in which balls 53 are interposed between an outer ring 50 and an inner ring 52. An end portion of the drive shaft 32L is fitted to be mounted in the inner ring 52 in such a manner as that rotational force can be transmitted. The outer ring 50 is such that a shaft portion 50a is integrally formed therewith, and this shaft portion 50a is mounted in a hub shaft portion 54 in such a manner that the rotational force can be transmitted. A rolling bearing unit 60 is provided on an outer circumference of the hub shaft portion 54. The rolling bearing unit 60 has a configuration in which balls 66 are interposed between an outer ring member and an inner ring member 64. In this rolling bearing unit 60, the inner ring member 64, which is made to confront the balls 66 in a right-hand row as viewed in Fig. 2, is made up by causing a constituent member formed as an independent component to fit on the hub shaft portion. 54, whereas an inner ring member for the balls 66 in a left-hand row is made up directly of part of an outer circumferential surface of the hub shaft portion 54.

A flange is integrally formed on a left end portion, as viewed in Fig. 2, of the hub shaft portion 54, on which a brake disc or the rear wheel 30 is mounted. A knuckle arm mounting flange 62a is formed integrally on an outer circumferential portion of the outer ring member 62 of the rolling bearing unit 60, and the rolling bearing unit 60 is mounted on a knuckle arm as a body side member via this flange 62a, whereby a wheel side portion of the drive shaft 32L is rotatably supported on the body member.

Since the assembly unit of the constant velocity joint 36 and the rolling bearing unit 60 shown in Fig. 2 is such as to be provided on part of the power transmission path R to the rear wheels which extends beyond the torque reduction and transmission joint 40, the assembly unit is configured to have a smaller capacity and a smaller size than those of an assembly unit made up of the constant velocity joint 26 and the corresponding rolling bearing unit which is provided on the power transmission path F to the front wheels as a configuration similar thereto. In particular, the outside diameter of the outer ring 50 of the constant velocity joint 36 is made smaller in diameter than the outside diameter of the constant velocity joint 26. Similarly, the outside diameter of an external portion of the outer ring member 62 of the rolling bearing unit 60 that is to be mounted on the knuckle arm is also made smaller in diameter than the rolling bearing unit provided on the power transmission path F to the front wheels I:n addition, a relationship between the outside diameter of the outer ring 50 of the constant velocity joint 36 and the outside diameter of the outer ring member 62 of the rolling bearing unit 60 is preferably configured such that the outside diameter of the outer ring 50 of the constant velocity joint 36 is equal to or less than the outside diameter of the outer ring member 62 of the rolling bearing unit 60 in consideration of the fact that the rolling bearing unit 60 is mounted on the knuckle arm.

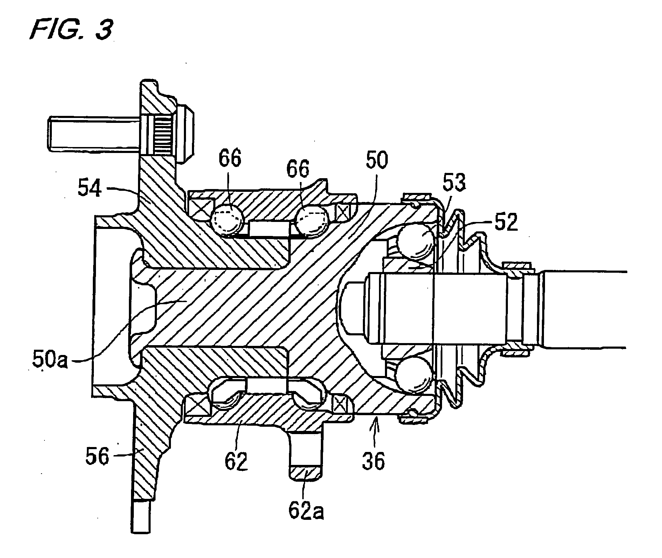

Fig. 3 is a diagram showing a specific configuration of another embodiment of an assembly unit of a constant velocity joint 36 and a rolling bearing unit 60 which corresponds to that in Fig. 2. Note that substantially similar constituent portions in the configuration shown in Fig. 3 to those in the configuration shown in Fig. 2 will be denoted by similar reference numerals to those imparted to the corresponding constituent portions in the configuration in Fig. 2, and the description of the similar constituent portions will be omitted,

An assembly unit shown in Fig. 3 is an assembly unit of which an axial dimension can be made smaller than that of the assembly unit shown in Fig. 2. A crucial point in the configuration, is that an inner ring member confronting balls 66 disposed in a right-hand row of the rolling bearing unit 60 is configured to be made up of an external portion of an outer ring 50 of the constant velocity joint 36, whereby the inner ring member 64 can be omitted which is formed as the independent member as is shown in Fig. 2, thereby making it possible to realize a reduction in the axial dimension. In addition, the overall outside diameter of the assembly unit can also be reduced in diameter in association with the omission of the inner ring member 64.

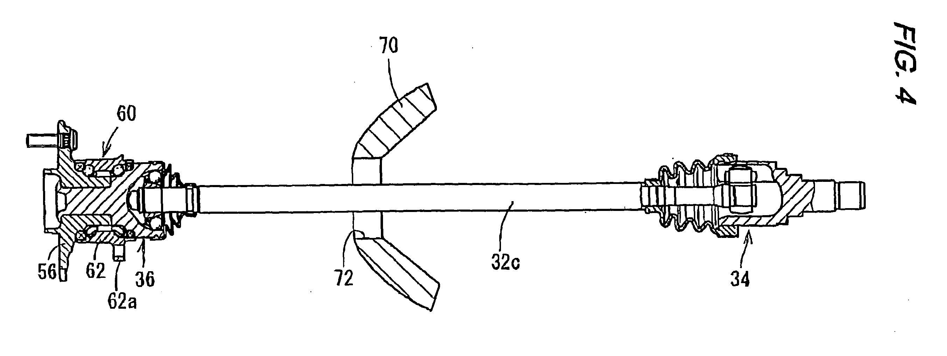

Fig. 4 shows a configuration of an assembly unit in which the drive shaft 32L provided between the rear differential unit .42 and the rear wheel 30 is integrated with a constant velocity joint and a rolling bearing unit. Fig. 4 shows a drive shaft L assembly unit which is disposed on a left-hand side of a rear differential unit 42, and a drive shaft R assembly unit that is disposed on a right-hand side will be configured the same although there are some differences with respect to transverse positions they are disposed.

As is shown in Fig. 4, a constant velocity joint 34 that is set at a right end of a drive shaft 32L is made up of a tripot constant velocity joint which can slide relative to the axial direction, and a constant velocity joint 36 that is set at a left end of the drive shaft L is made up of a fixed Birfield constant velocity joint which cannot slide relative to the axial direction. Note that this left end configuration is the aforesaid configuration, shown in Fig. 3. The reason that one of the constant velocity joints 34, 36 which are provided at both the ends of the drive shaft 32L., specifically, in this embodiment, the right-hand constant velocity joint 34 is made to slide relative to the axial direction is to accommodate an axial movement of the drive shaft 32L which is produced in association with the rear wheel being flexed vertically when the wheel in question is bouncing on the road surface while the vehicle is running.

The drive shaft assembly shown in Fig. 4 is inserted into a mounting hole 72 of a knuckle arm 70 to be mounted therein as the assembly unit. In Fig. 4, a rear differential unit 42 is provided in a rightward position, while a left rear wheel is disposed in a leftward position. Based on this positional relationship, the drive shaft assembly is inserted rightwards into the mounting hole 72 of the knuckle arm 70 from the left-hand side with the constant velocity joint 34 making the head, and a flange 62a of an outer ring member 62 of a rolling bearing unit 60 is mounted on the knuckle arm 70 to be fixed thereto.

As this occurs, in the drive shaft 32L assembly, as has been described above, since the constant velocity joints 34, 36 which are mounted at the ends of the assembly unit and the rolling bearing unit 60 can be made small in size and hence, their outside diameters can be reduced in diameter, in association with the reduction in size of these constituent components, the mounting hole 72 of the knuckle 70 can also be formed into a hole of a relatively small diameter which allows the assembly unit to pass therethrough. The fact that the mounting hole 72 can be formed relatively small in diameter is advantageous in that the strength of the knuckle arm 70 is secured.

In addition, in the event that constant velocity joints 26 which are provided on the power transmission path F to the front wheels are configured to make up assemblies together with drive shafts 22R, 22L, since the driving force is transmitted without being reduced, the conventional configuration is taken as the configuration of knuckle arms which supports the assemblies. Namely, mounting holes of the knuckle arms are formed which have a larger diameter or size than the size of the mounting holes of the knuckle arms for the assemblies provided on the power transmission path R to the rear wheels. In the event that a mounting hole of a large diameter cannot be opened in the knuckle arm, the knuckle arm is divided into U-shaped two halves so as to hold the outer ring member of the rolling bearing unit therebetween. In this way, the mounting holes of the knuckle arms for the power transmission path R to the rear wheel through which the reduced drive torque is transmitted are allowed to be formed in a relatively small diameter, the configuration of the knuckle arms can be facilitated.

According to the embodiment that has been described above, since the torque reduction and transmission joint 40 is provided on the power transmission path R to the rear wheels so that the drive torque that is transmitted-to the rear wheels 30 is reduced for transmission, the constant velocity joints 34, 36 and the rolling bearing units 60 which are provided on the power transmission path R to the rear wheels can be reduced in size, and hence, the weights thereof also can be reduced accordingly. The diameter of the drive shafts 32R, 32L can also be reduced or thinned when it is really required. Consequently, the weight of the constituent components which make up the power transmission path R to the rear wheels can be reduced to be smaller than the weight of the constituent components which make up the power transmission path F to the front wheels, as a result of which the fuel economy can also be improved.

Thus, while the embodiment of the invention has been described heretofore, the invention is such as to allow other various embodiments to be conceived based thereon.

For example, while in the embodiment, the invention is described as being applied to the four wheel drive vehicle derived from the front wheel drive vehicle, the invention may be applied to a four wheel drive vehicle derived from a rear wheel drive vehicle, in which a torque reduction and transmission joint is provided on the power transmission path to the front wheels as the driving force transmission limiter, so as to reduce the drive torque to the front wheels to be lower than the drive torque to the rear wheels.

In addition, while in the embodiment, the torque transmission control of the torque reduction and transmission joint as the driving force transmission limiter is described such that the rotational driving force is not transmitted while the vehicle, is normally driven, while only when the difference in wheel speed between the front and rear wheels reaches or exceeds the predetermined value, the drive torque is reduced for transmission, the invention may be such that the drive torque is normally reduced for transmission even when the vehicle is normally driven.

In addition, while in the embodiment, the constant velocity joints which are provided on the power transmission units for transmitting the driving force to the front and rear wheels are described as utilizing the Birfield joints and tripot joints, the invention may be such that the other known various types of constant velocity joints are used as the constant velocity.joints on the power transmission units. In addition, the invention may be such that in place of the constant velocity joints, general transmission joints such as a cross joint are adopted.

## Claims

1. A driving force transmission system for a four wheel drive vehicle, comprising:
a first pair of wheels;
a second pair of wheels;
a first power transmission path connecting a transmission to which power is supplied from a driving source and the first pair of wheels to transmit a driving force to the first pair of wheels;
a second power transmission path connecting the transmission and said second pair of wheels to transmit a driving force to the second pair of wheels; and
a driving force transmission limiter capable of limiting the driving force to the first pair of wheels so that the driving force transmitted to the first pair of wheels is lower than the driving force transmitted to the second pair of wheels;
wherein a first joint unit provided in the first power transmission path between the driving force transmission limiter and the first pair of wheels is configured to have a smaller torque transmission capacity and a smaller size than a second joint unit provided in the second power transmission path.

2. A driving force transmission system for a four wheel drive vehicle as set forth in claim 1, wherein a rolling bearing unit which is provided in the first power transmission path between the driving force transmission limiter and the first pair of wheels is configured to have a smaller torque transmission capacity and a smaller size than a second rolling bearing unit provided in the second power transmission path.

3. A driving force transmission system for a four wheel drive vehicle as set forth in Claim 1, further comprising:
a differential unit in the first power transmission path between the driving force transmission limiter and the first pair of wheels;
a drive shaft assembly in which a constant velocity joint is assembled to an end of a drive shaft provided in the first power transmission path between the differential unit and the first pair of wheels;
a knuckle provided on a side of the first pair of drive wheels to support the drive shaft assembly,
wherein the drive shaft assembly is configured to be inserted in a mounting hole of the knuckle from the side of the first pair of drive wheels towards the differential unit.

4. A driving force transmission system for a four wheel drive vehicle, comprising:
a first pair of wheels;
a second pair of wheels;
a first power transmission path connecting a transmission to which power is supplied from a driving source and the first pair of wheels to transmit a driving force to the first pair of wheels;
a second power transmission path connecting the transmission and said second pair of wheels to transmit a driving force to the second pair of wheels;
a driving force transmission limiter capable of limiting the driving force to the first pair of wheels so that the driving force transmitted to the first pair of wheels is lower than the second pair of wheels;
wherein a constant velocity joint and a rolling bearing unit are provided in the first power transmission path between the driving force transmission limiter and the first pair of wheels, and
an outer diameter of an outer ring of the constant velocity joint is substantially equal to or less than an outer diameter of an outer ring member of the rolling bearing unit .

5. A driving force transmission system for a four wheel drive vehicle as set forth in Claim 4, wherein an inner ring member of the rolling bearing unit is integrally formed with the outer ring of the constant velocity joint.
